# FASCICULE DE BREVET EUROPEEN

(11) **EP 2 352 906 B1**
(45) Date de publication et mention de la délivrance du brevet: **19.12.2012**
(21) Numéro de dépôt: 09760160.3
(22) Date de dépôt: 16.10.2009
(51) Int. Cl.: F01D 5/08, G05D 23/02, F01D 5/30

(54) **Aube de turbine équipée de moyens de réglage de son débit de fluide de refroidissement et turbine associée**
Turbinenschaufel mit Mitteln zur Einstellung seiner Kühlfluid-Durchflussrate und zugehörige Turbine
Turbine blade provided with means of adjusting its cooling fluid flow rate and corresponding turbine

(30) Priorité: 22.10.2008 FR 0857154
(43) Date de publication de la demande: 10.08.2011
(73) Titulaire: Snecma, 75015 Paris (FR)
(72) Inventeur: GROHENS, Régis, F-77220 Tournan En Brie (FR); ROYAN, Renaud Gabriel Constant, F-94370 Sucy En Brie (FR)
(74) Mandataire: Barbin le Bourhis, Joël
(86) Numéro de dépôt international: PCT/FR2009/051975
(87) Numéro de publication internationale: WO 2010/046584

(56) Documents cités:
- EP-A- 0 250 323
- EP-A- 0 266 235
- EP-A- 1 936 468
- US-A- 3 814 313
- US-A- 4 807 433
- US-A- 5 054 996

## Description

L'invention se rapporte à une aube de turbine refroidie par circulation interne d'un fluide de refroidissement tel que de l'air. Elle concerne plus particulièrement un perfectionnement permettant un réglage automatique, passif, c'est-à-dire non commandé, du débit de fluide de refroidissement des aubes d'une roue de rotor haute pression dans un turboréacteur d'avion, la variation du débit de fluide de refroidissement étant fonction du régime de fonctionnement du turboréacteur.

Dans un turboréacteur d'avion, les aubes mobiles de la turbine haute pression sont situées juste en sortie de la chambre de combustion. Elles sont soumises à des températures très élevées. Il est donc nécessaire de les refroidir en permanence. On procède généralement par circulation interne d'un fluide de refroidissement, typiquement de l'air prélevé à la sortie du compresseur haute pression.

On rappelle qu'une telle turbine haute pression comporte un disque muni d'alvéoles à sa périphérie extérieure, chaque alvéole recevant un pied d'aube. L'aube est ainsi rattachée au disque par la liaison de forme définie entre l'alvéole et ledit pied d'aube.

Chaque aube comprend des cavités alimentées en fluide de refroidissement. Ainsi, l'air provenant du compresseur haute pression pénètre par quelques perçages ménagés sous le pied d'aube, traverse les cavités et ressort par de multiples orifices répartis sur la surface de l'aube. L'air de refroidissement prélevé au niveau du compresseur haute pression est injecté dans les alvéoles du disque pour pouvoir pénétrer dans les aubes.

Etant donné que cet air de refroidissement est prélevé sur le débit du compresseur haute pression et qu'il ne participe pas à la combustion dans la chambre de combustion, il est important de minimiser son débit pour augmenter la performance du réacteur et donc diminuer sa consommation spécifique.

L'invention résulte de l'analyse suivante.

Les plus fortes températures sont atteintes au décollage et pendant la phase de montée. C'est donc pendant ces phases que l'endommagement des aubes est le plus grand.

On est donc amené à tenir compte d'une température maximum admissible au décollage permettant de garantir une durée de vie prescrite des aubes. Cette température détermine un certain débit d'air de refroidissement.

En revanche, la phase de croisière est la plus longue et la température des aubes est plus faible, d'une centaine de degrés environ.

Il serait donc avantageux de réduire le débit d'air de refroidissement pendant cette phase, ce qui se traduirait par une augmentation de la température des aubes, tolérable en régime de croisière. Cependant, le nouveau débit d'air de refroidissement ainsi calculé serait pratiquement le même au décollage et se traduirait par une augmentation correspondante de la température des aubes au décollage, abrégeant considérablement la durée de vie de celles-ci. On estime qu'une augmentation de 20 degrés de cette température au décollage et pendant la phase de montée, serait responsable d'une réduction de moitié de la durée de vie.

US 4,807,433 ou US 5,054,996 décrit une aube mobile de turbine refroidie par circulation interne de fluide de refroidissement, contrôlée par une valve thermostatique.

L'idée de base de l'invention consiste à ne réduire le débit d'air de refroidissement (comparé aux valeurs déterminées selon les règles en vigueur) que pour le régime de croisière, tout en faisant appel à un réglage "passif" du débit, non commandé, entièrement piloté par les différences de températures de l'aube entre sa température en régime de croisière et sa température aux autres régimes, notamment pendant le décollage.

Plus précisément, l'invention concerne donc une aube de turbine refroidie par circulation interne de fluide de refroidissement entrant par des orifices situés sous un pied d'aube, caractérisée en ce qu'elle comporte une plaquette de réglage munie de trous situés en regard desdits orifices, en ce que cette plaquette de réglage est constituée d'un matériau à coefficient de dilatation différent de celui qui constitue le pied d'aube et en ce qu'elle est montée sous ledit pied d'aube avec guidage longitudinal et selon un mode de fixation conservant la possibilité d'un déplacement relatif entre les trous de la plaquette de réglage et les orifices du pied d'aube en sorte que la section de passage de fluide augmente avec la température.

L'aube en question peut être une aube mobile de rotor de turbine, notamment une aube de rotor de turbine haute pression dans un turboréacteur d'avion.

Selon un mode de réalisation avantageux, la plaquette de réglage est en céramique, à faible coefficient de dilatation comparé à celui du pied d'aube.

De façon connue en soi, le pied d'aube comporte, à sa partie inférieure, une plaquette de calibrage métallique dans laquelle sont définis les orifices précités. Ces orifices sont donc en correspondance partielle avec les trous de ladite plaquette de réglage. La plaquette métallique est par exemple soudée sous le pied d'aube.

Avantageusement, ladite plaquette de réglage est fixée à une seule de ses extrémités audit pied d'aube, ce qui préserve la libre dilatation du pied d'aube par rapport à la plaquette.

Selon un mode de réalisation, la plaquette est engagée dans un guide rectiligne solidaire du pied d'aube, pour empêcher la rotation de la plaquette par rapport au pied d'aube.

Pour mieux exploiter l'amplitude de la variation de longueur du pied d'aube (c'est-à-dire de la plaquette de calibrage), les orifices situés sous le pied d'aube peuvent avoir une forme triangulaire.

Selon une autre caractéristique avantageuse, les trous de la plaquette de réglage peuvent avoir une forme carrée ou rectangulaire.

L'invention concerne aussi une turbine comportant un disque et des aubes rattachées à la périphérie de ce disque, chaque aube étant conforme à la définition qui précède.

L'invention sera mieux comprise et d'autres avantages de celle-ci apparaîtront mieux à la lumière de la description qui va suivre, donnée uniquement à titre d'exemples et faite en référence aux dessins annexés, dans lesquels :

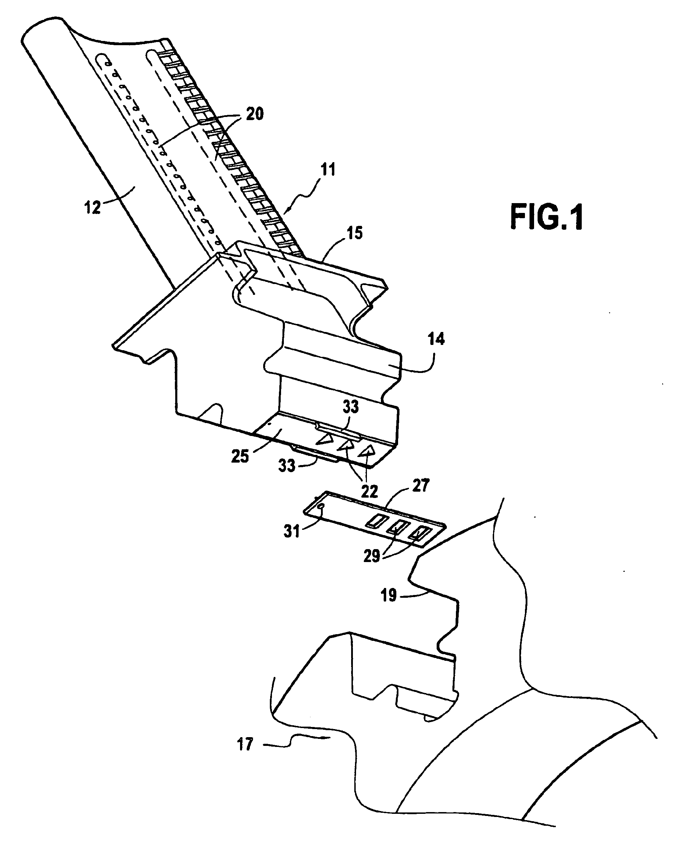

- la figure 1 représente en perspective éclatée, une aube conforme à l'invention et une partie d'un disque de rotor ;
- la figure 2 est une vue schématique de dessous du pied d'aube au décollage ;
- la figure 3 est une vue schématique partielle de dessous, du pied d'aube, illustrant la variation de débit.

On a représenté une aube mobile de turbine 11 composée d'une pale 12 et d'un pied d'aube 14. La pale est séparée du pied d'aube par une plateforme 15. Une roue de turbine est constituée d'un disque 17 et d'une pluralité de telles aubes. Le disque 17 comporte, à sa périphérie, des alvéoles 19. Chaque alvéole a un profil correspondant à celui d'un pied d'aube 14 en sorte que chaque aube est rattachée au disque par la liaison de forme définie entre l'alvéole et le pied d'aube. Les plateformes 15 reconstituent la paroi interne de la veine d'écoulement des gaz chauds éjectés de la chambre de combustion du turboréacteur. Cet agencement est connu et ne sera pas décrit plus en détail. On sait aussi qu'il est nécessaire de refroidir les aubes puisque cette turbine est entraînée par l'écoulement des gaz chauds. Pour ce faire, chaque aube est creuse et comprend des cavités 20 alimentées par des orifices 22, calibrés, situés sous le pied d'aube. Une circulation interne de fluide de refroidissement est ainsi entretenue dans chaque aube. Plus précisément, de l'air est prélevé au niveau d'un compresseur haute pression normalement chargé d'alimenter en comburant la chambre de combustion. Cet air est canalisé vers les alvéoles 19 du disque 17, il pénètre par les orifices 22 situés sous les pieds d'aube, s'écoule dans les cavités internes 20 et est évacué par de multiples orifices débouchant à la surface de la pale 12.

Pour le calibrage du débit d'air, une plaquette de calibrage 25, métallique, est fixée, généralement brasée, à la face interne du pied d'aube 14. Cette plaquette de calibrage 25, sous forme d'une languette rectangulaire étroite comporte un certain nombre de perçages définissant les orifices 22. Les coefficients de dilatation du pied d'aube 14 et de la plaquette 25 sont identiques en sorte que l'ensemble se dilate en fonction de la température. Cette dilatation est mise à profit, dans le cadre de l'invention, pour faire varier le débit d'air de refroidissement.

Plus particulièrement, une plaquette de réglage 27 constituée d'un matériau à coefficient de dilatation différent de celui qui constitue le pied d'aube 14 et la plaquette de calibrage 25, est munie de trous 29 situés en regard des orifices 22 de la plaquette de calibrage. La plaquette de réglage 27 a une forme générale rectangulaire étroite, comparable à celle de la plaquette de calibrage.

Ladite plaquette de réglage 27 est montée sous le pied d'aube, ici en regard et au contact de la plaquette de calibrage 22, avec un guidage longitudinal (obtenu ici par un guide rectiligne 33) et selon un mode de fixation préservant la possibilité d'un déplacement relatif entre les trous 29 de la plaquette de réglage et les orifices 22 du pied d'aube (ici de la plaquette de calibrage) en sorte que la section de passage de fluide augmente avec une augmentation de température.

Plus précisément, la plaquette de réglage 27 est en matériau céramique ou composite avec un coefficient de dilatation très faible comparé à celui du pied d'aube et de la plaquette de calibrage, métalliques.

Les orifices d'entrée 22 définis sous le pied d'aube sont en correspondance avec les trous 29 de la plaquette de réglage 27. Cette plaquette de réglage est fixée à une seule de ses extrémités audit pied d'aube par un élément d'ancrage 31. La plaquette de réglage 27 est maintenue dans le guide rectiligne 33 solidaire du pied d'aube 14 ou de la plaquette de calibrage 25. Elle est appliquée contre la plaquette de calibrage par la force centrifuge.

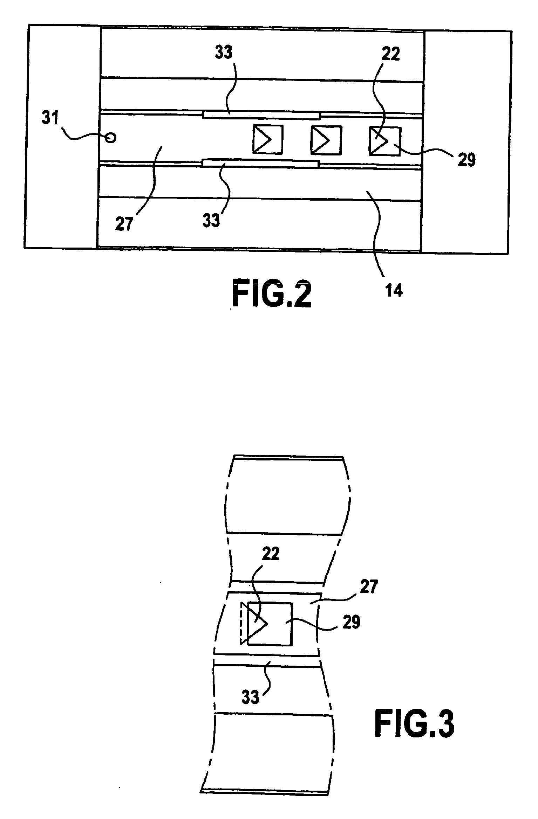

De cette façon, au décollage, l'aube mobile 11 qui est naturellement portée à une température plus élevée est amenée à se dilater dans son ensemble. Au niveau du pied d'aube 14, on observe une variation de la correspondance entre les orifices 22 de la plaquette de calibrage et les trous 29 de la plaquette de réglage 27, puisque cette dernière ne s'allonge pratiquement pas. Comme le montre la figure 2, cette variation relative se traduit par une section d'entrée disponible maximum pour l'air de refroidissement, au décollage. Il suffit de calibrer cette section pour que la température au décollage plafonne à une valeur garantissant une durée de vie prescrite de l'aube. En revanche, en régime de croisière, la contraction du pied d'aube résultant d'un abaissement de température de l'aube se traduit par une diminution de la section d'alimentation de l'air de refroidissement (figure 3) et par conséquent par un prélèvement moindre du débit d'air sur le compresseur. Il en résulte une augmentation du rendement global du turboréacteur, en régime de croisière. Si on ne diminue le débit que pendant le régime de croisière, la durée de vie des aubes n'est diminuée que d'une faible valeur, de l'ordre de 15 %. Ceci peut être facilement compensé en augmentant légèrement le débit pendant la phase décollage-montée. En définitive, on préserve la durée de vie prescrite des aubes tout en augmentant les performances du turboréacteur, en réduisant la consommation spécifique de celui-ci en régime de croisière.

Pour optimiser la variation de débit en fonction des différences de dilatation entre le pied d'aube et la plaquette de réglage, on a donné une forme triangulaire aux perçages de la plaquette de calibrage et une forme carrée ou rectangulaire aux trous de la plaquette de réglage.

Selon l'exemple, chaque orifice 22 a une surface de 3,5 mm². En regard de chaque orifice de la plaquette de calibrage, se trouve un trou 29 carré ou rectangulaire de la plaquette de réglage. Le bord de ce trou se trouve en coïncidence avec le côté transversal du triangle pour une température du pied d'aube au décollage de 580°C.

Après le décollage, le pied d'aube se rétracte, ce qui provoque une obturation partielle de l'orifice triangulaire au voisinage de sa base transversale. Lorsque le turboréacteur est en régime de croisière, la température est ramenée à 450°C. La contraction du pied d'aube vue par la plaquette céramique est de 0,025 mm. Il en résulte une diminution de la section de 2,8 %. La réduction du débit consommé par l'aube mobile en régime de croisière est proportionnelle à cette réduction de surface.

## Revendications

1. Aube de turbine refroidie par circulation interne de fluide de refroidissement entrant par des orifices (22) situés sous un pied d'aube (14), **caractérisée en ce qu'**elle comporte une plaquette de réglage (27) munie de trous (29) situés en regard desdits orifices (22), **en ce que** cette plaquette de réglage (27) est constituée d'un matériau à coefficient de dilatation différent de celui qui constitue le pied d'aube et **en ce qu'**elle est montée sous ledit pied d'aube avec guidage longitudinal et selon un mode de fixation (31) conservant la possibilité d'un déplacement relatif entre les trous de la plaquette de réglage et les orifices du pied d'aube en sorte que la section de passage de fluide augmente avec la température.

2. Aube de turbine selon la revendication 1, **caractérisée en ce que** cette aube est mobile.

3. Aube de turbine selon la revendication 1 ou 2, **caractérisée en ce que** ladite plaquette de réglage (27) est en un matériau à coefficient de dilatation inférieur à celui qui constitue le pied d'aube.

4. Aube de turbine selon l'une des revendications précédentes, **caractérisée en ce que** ladite plaquette de réglage (27) est en matériau céramique, à faible coefficient de dilatation comparé à celui dudit pied d'aube.

5. Aube de turbine selon l'une des revendications 1 à 3, **caractérisée en ce que** ladite plaquette de réglage (27) est en matériau composite, à faible coefficient de dilatation comparé à celui dudit pied d'aube.

6. Aube de turbine selon l'une des revendications précédentes, **caractérisée en ce que** ledit pied d'aube comporte à sa partie inférieure une plaquette de calibrage (25) métallique dans laquelle sont définis les orifices (22) précités, en correspondance avec les trous de ladite plaquette de réglage (27).

7. Aube de turbine selon l'une des revendications précédentes, **caractérisée en ce que** ladite plaquette de réglage (27) est fixée (31) à une seule de ses extrémités audit pied d'aube.

8. Aube de turbine selon la revendication 7, **caractérisée en ce que** ladite plaquette est engagée dans un guide rectiligne (33) solidaire dudit pied d'aube (14) ou de la plaquette de calibrage (25).

9. Aube de turbine selon l'une des revendications précédentes, **caractérisée en ce que** les orifices (22) situés sous le pied d'aube ont une forme triangulaire.

10. Aube de turbine selon l'une des revendications précédentes, **caractérisée en ce que** les trous (29) de la plaquette de réglage ont une forme carrée ou rectangulaire.

11. Turbine comportant un disque (17) et des aubes (11), le disque étant muni d'alvéoles (19) à sa périphérie recevant chacune un pied d'aube (14), de l'air étant canalisée vers lesdites alvéoles, **caractérisée en ce que** chaque aube (11) est conforme à l'une des revendications précédentes.

12. Turbine selon la revendication 11, **caractérisée en ce qu'**il s'agit d'une turbine haute pression d'un turboréacteur d'avion.

## Claims

1. A turbine blade cooled by an internal flow of cooling fluid entering via orifices (22) situated beneath a blade root (14), the blade being **characterized in that** it includes an adjustment plate (27) provided with holes (29) situated in register with said orifices (22), **in that** said adjustment plate (27) is made of a material having a coefficient of expansion different from the coefficient of expansion of the material constituting the blade root, and **in that** the adjustment plate is mounted under the blade root with longitudinal guidance and is fastened (31) in a manner that conserves the possibility of relative movement between the holes in the adjustment plate and the orifices in the blade root such that the fluid flow section increases with temperature.

2. A turbine blade according to claim 1, **characterized in that** the blade is a moving blade.

3. A turbine blade according to claim 1, **characterized in that** said adjustment plate (27) is made of a material having a coefficient of expansion that is less than the coefficient of expansion of the material constituting the blade root.

4. A turbine blade according to claim 1, **characterized in that** said adjustment plate (27) is made of a ceramic material, having a coefficient of expansion that is small compared with the coefficient of expansion of said blade root.

5. A turbine blade according to claim 1, **characterized in that** said adjustment plate (27) is made of composite material, having a coefficient of expansion that is small compared with the coefficient of expansion of said blade root.

6. A turbine blade according to claim 1, **characterized in that** said blade root includes at its bottom portion a metal calibration plate (25) having the above-mentioned orifices (22) defined therein, in correspondence with the holes in said adjustment plate (27).

7. A turbine blade according to claim 1, **characterized in that** said adjustment plate (27) is fastened (31) at only one of its ends to said blade root.

8. A turbine blade according to claim 7, **characterized in that** said plate is engaged in a rectilinear guide (33) secured to said blade root (14) or to the calibration plate (25).

9. A turbine blade according to claim 1, **characterized in that** the orifices (22) situated under the blade root are triangular in shape.

10. A turbine blade according to claim 1, **characterized in that** the holes (29) in the adjustment plate are square or rectangular in shape.

11. A turbine including a disk (17) and blades (11), the disk being provided with slots (19) in its periphery, each slot receiving a blade root (14), air being channeled to said slots, the turbine being **characterized in that** each blade (11) is in accordance with claim 1.

12. A turbine according to claim 11, **characterized in that** it is a high pressure turbine of an airplane turbojet.

## Patentansprüche

1. Turbinenschaufel, die durch interne Zirkulation von Kühlfluid, das über unter einem Schaufelfuß (14) gelegene Öffnungen (22) eintritt, gekühlt wird, **dadurch gekennzeichnet, daß** sie eine Stellplatte (27) umfaßt, die mit Löchern (29) ausgestattet ist, welche den Öffnungen (22) gegenüber liegen, daß diese Stellplatte (27) aus einem Werkstoff mit einem anderen Ausdehnungskoeffizienten als derjenige, welcher den Schaufelfuß bildet, besteht und daß sie unter dem Schaufelfuß mit Längsführung und mit einer Befestigungsart (31) angebracht ist, die die Möglichkeit einer Relativbewegung zwischen den Löchern der Stellplatte und den Öffnungen des Schaufelfußes wahrt, so daß der Fluiddurchlaßquerschnitt mit der Temperatur zunimmt.

2. Turbinenschaufel nach Anspruch 1, **dadurch gekennzeichnet, daß** diese Schaufel beweglich ist.

3. Turbinenschaufel nach Anspruch 1 oder 2, **dadurch gekennzeichnet, daß** die Stellplatte (27) aus einem Werkstoff mit einem niedrigeren Ausdehnungskoeffizienten als derjenige, welcher den Schaufelfuß bildet, besteht.

4. Turbinenschaufel nach einem der vorhergehenden Ansprüche, **dadurch gekennzeichnet, daß** die Stellplatte (27) aus Keramikwerkstoff mit - im Vergleich zu dem des Schaufelfußes - geringen Ausdehnungskoeffizienten besteht.

5. Turbinenschaufel nach einem der Ansprüche 1 bis 3, **dadurch gekennzeichnet, daß** die Stellplatte (27) aus Verbundwerkstoff mit - im Vergleich zu dem des Schaufelfußes - geringen Ausdehnungskoeffizienten besteht.

6. Turbinenschaufel nach einem der vorhergehenden Ansprüche, **dadurch gekennzeichnet, daß** der Schaufelfuß an seinem unteren Teil eine metallische Kalibrierplatte (25) umfaßt, in der die vorgenannten Öffnungen (22) in Übereinstimmung mit den Löchern der Stellplatte (27) definiert sind.

7. Turbinenschaufel nach einem der vorhergehenden Ansprüche, **dadurch gekennzeichnet, daß** die Stellplatte (27) an einem einzigen ihrer Enden an dem Schaufelfuß befestigt ist (31).

8. Turbinenschaufel nach Anspruch 7, **dadurch gekennzeichnet, daß** die Platte in eine geradlinige Führung (33), welche mit dem Schaufelfuß (14) oder der Kalibrierplatte (25) fest verbunden ist, eingeführt ist.

9. Turbinenschaufel nach einem der vorhergehenden Ansprüche, **dadurch gekennzeichnet, daß** die unter dem Schaufelfuß gelegenen Öffnungen (22) eine dreieckige Form aufweisen.

10. Turbinenschaufel nach einem der vorhergehenden Ansprüche, **dadurch gekennzeichnet, daß** die Löcher (29) der Stellplatte eine quadratische oder rechteckige Form aufweisen.

11. Turbine, die eine Scheibe (17) und Schaufeln (11) umfaßt, wobei die Scheibe an ihrem Umfang mit Vertiefungen (19) versehen ist, die jeweils einen Schaufelfuß (14) aufnehmen, wobei Luft in Richtung der Vertiefungen geleitet wird, **dadurch gekennzeichnet, daß** jede Schaufel (11) einem der vorhergehenden Ansprüche entspricht.

12. Turbine nach Anspruch 11, **dadurch gekennzeichnet, daß** es sich um eine Hochdruckturbine eines Turbostrahltriebwerks eines Flugzeugs handelt.
